(19) Europäisches Patentamt
European Patent Office
Office européen des brevets

(11) **EP 3 407 604 A1**

(12) **EUROPEAN PATENT APPLICATION**
published in accordance with Art. 153(4) EPC

(43) Date of publication:
**28.11.2018 Bulletin 2018/48**

(51) Int Cl.:
***H04N 19/30*** (2014.01)    ***G09G 3/34*** (2006.01)

(21) Application number: **16893049.3**

(22) Date of filing: **09.03.2016**

(86) International application number:
**PCT/CN2016/075989**

(87) International publication number:
**WO 2017/152398 (14.09.2017 Gazette 2017/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Huawei Technologies Co., Ltd.
Longgang District
Shenzhen, Guangdong 518129 (CN)**

(72) Inventors:
• **LI, Meng
Shenzhen
Guangdong 518129 (CN)**
• **CHEN, Hai
Shenzhen
Guangdong 518129 (CN)**

(74) Representative: **Gill Jennings & Every LLP
MXL
The Broadgate Tower
20 Primrose Street
London EC2A 2ES (GB)**

(54) **METHOD AND DEVICE FOR PROCESSING HIGH DYNAMIC RANGE IMAGE**

(57)    Embodiments of the present invention provide a high dynamic range image processing method and apparatus, to resolve a prior-art problem of displayed-image distortion. The method includes: obtaining a high dynamic range image; dividing the high dynamic range image into a first liquid crystal image and a first backlight image; performing compression processing on the first liquid crystal image by decreasing a quantity of bits used to represent a single pixel of the first liquid crystal image, to obtain a compressed first liquid crystal image to be displayed at a liquid crystal layer of a display, where the display is configured to display the high dynamic range image; and performing compression processing on the first backlight image by decreasing a quantity of bits used to represent a single pixel of the first backlight image, to obtain a compressed first backlight image to be displayed at a backlight layer of the display.

S401

Obtain a high dynamic range image

S402

Divide the high dynamic range image into a first liquid crystal image and a first backlight image

S403

Perform compression processing on the first liquid crystal image by decreasing a quantity of bits used to represent a single pixel of the first liquid crystal image, to obtain a compressed first liquid crystal image to be displayed at a liquid crystal layer of a display, where the display is configured to display the high dynamic range image

S404

Perform compression processing on the first backlight image by decreasing a quantity of bits used to represent a single pixel of the first backlight image, to obtain a compressed first backlight image to be displayed at a backlight layer of the display device

FIG. 4

## Description

## TECHNICAL FIELD

Embodiments of the present invention relate to the field of image processing technologies, and in particular, to a high dynamic range image processing method and apparatus.

## BACKGROUND

A dynamic range (Dynamic Range) represents a ratio of a maximum grayscale value to a minimum grayscale value in a displayable range of an image. Currently, in most color digital images, each of channels R, G, and B is stored by using one byte, that is, 8 bits. To be specific, when a representation range of each channel is grayscale levels from 0 to 255, a dynamic range of an image is 0 to 255. However, a dynamic range in a same scenario in the real world is within a range from $10^{-3}$ to $10^{6}$, and the range is referred to as a high dynamic range (English: High dynamic range, HDR for short). A high dynamic range image (HDRI) is an image type that can represent a light luminance range change in an actual scenario. Therefore, optical characteristics of a bright region and a dark region in the scenario can be better represented. A pixel value range to be represented by the high dynamic range image is usually extremely large, and sometimes needs to be hundreds of thousands or even millions. Each color channel of the high dynamic range image requires more data bits than a conventional image because of linear coding of the high dynamic range image and a need to represent a value in a luminance range visible to human eyes or an even larger range. A high dynamic range pixel is often indicated by using a 16-bit half-precision (half precision) floating point number or a 32-bit floating point number.

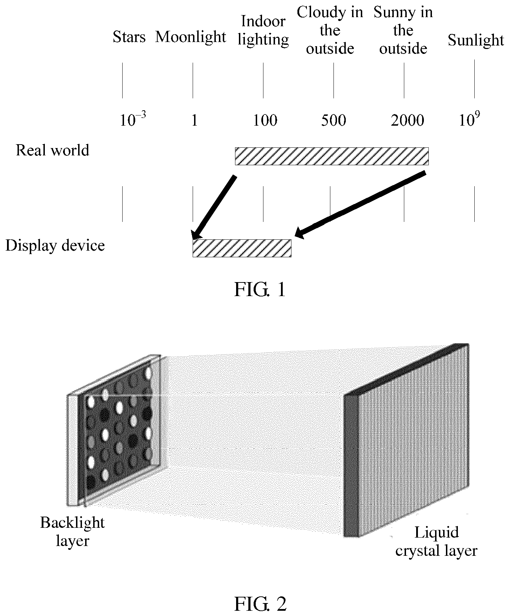

An imaging process of an image on a display is actually mapping from high dynamic range light information in the real world to low dynamic range light information of a displayed image on the display, and is a nonlinear process, as shown in FIG. 1. Tone mapping is currently a commonly used method for converting a high dynamic range image into a low dynamic range image, and provides a method for mapping a luminance value in a real scenario to a range that can be displayed on a display.

A high dynamic range display is popularly explained as a display with a higher peak pixel value, a lower black spot (minimum pixel value), and a larger contrast. Displays may be classified into a light emitting diode (English: Light Emitting Diode, LED for short) backlight display, a plasma display, a laser display, and the like based on backlight differences. The LED backlight display is currently the most widely used display. A dynamic range of a conventional LED backlight device is only $10^{-1}$ to $10^{3}$ nits. This relatively small dynamic range greatly affects quality of a displayed image. The dynamic range of the display can be increased by increasing backlight intensity. However, because severe light leakage exists in an LCD, only increasing a maximum backlight luminance value cannot be satisfactory. For example, if the maximum backlight luminance value is increased to 1000 nits, luminance of a minimum black spot increases accordingly and may be, for example, 0.5 nits. In this case, the dynamic range is 1000:0.5=2000. The backlight intensity is increased by 10 times, but the dynamic range is only doubled. Therefore, a new solution is required, and local dimming (local dimming) is a relatively common method. A display using this method may display an HDR image by using non-uniform backlight. Specifically, backlight intensity on different regions of a screen may be adjusted based on an input image. A display that can implement local dimming is usually a double-layer structure, and includes a backlight (English: Backlight, BL for short) layer and a liquid crystal (English: Liquid Crystal, LC for short) layer, as shown in FIG. 2. The backlight layer can perform different dimming based on different partitions. A backlight layer image may be equivalent to a low-resolution image, and a liquid crystal layer image is equivalent to a high-resolution image. The backlight layer image and the liquid crystal layer image are combined to obtain an image that includes complete information.

The high dynamic range image needs to be processed before being displayed on the display. Currently, used processing is usually as follows: First, an HDR image (for example, 16 bits) is compressed by using a tone mapping method into a dynamic range (8 or 10 bits) that can be displayed on an existing display; then layer division processing is performed on an image of 8 or 10 bits to obtain a backlight layer image and a liquid crystal layer image; and then dimming is performed on the backlight layer image, the liquid crystal layer image is compensated for, and the two layer images are fused to obtain a final image that can be displayed on the display. However, in a currently used processing solution, an image first needs to be compressed by using a tone mapping algorithm, so that a 16-bit HDR image source is compressed into an image of 8 or 10 bits. Therefore, an obtained image used for processing of a local dimming module is a compressed low-bit image, and a finally displayed image effect is used to simulate the low-bit image, but is not the original HDR image source. Consequently, a displayed image may not be consistent with an original HDR image, and image distortion is caused.

## SUMMARY

Embodiments of the present invention provide a high dynamic range image processing method and apparatus, to resolve a prior-art problem of displayed-image distortion.

According to a first aspect, an embodiment of the present invention provides a high dynamic range image processing method, and the method includes: obtaining a high dynamic range image; dividing the high dynamic range image into a first liquid crystal image and a first backlight image; performing compression processing on the first liquid crystal image by decreasing a quantity of bits used to represent a single pixel of the first liquid crystal image, to obtain a compressed first liquid crystal image to be displayed at a liquid crystal layer of a display, where the display is configured to display the high dynamic range image; and performing compression processing on the first backlight image by decreasing a quantity of bits used to represent a single pixel of the first backlight image, to obtain a compressed first backlight image to be displayed at a backlight layer of the display.

In a conventional HDR processing technology, compression processing is first performed on an HDR image and then backlight control processing is performed. In this way, a large quantity of image details of a displayed HDR image are lost. Backlight control processing is performed on a compressed image, and therefore the backlight control processing can only be used to simulate the compressed image in a processing process. This may result in inconsistency between a finally processed displayed image and the original HDR image. In this embodiment of the present invention, layer division processing is directly performed on the HDR image, and then backlight control processing is performed on a backlight image obtained after layer division, so that loss of a large amount of detail information due to compression can be avoided.

In a possible design, the performing compression processing on the first liquid crystal image by decreasing a quantity of bits used to represent a single pixel of the first liquid crystal image may be implemented in the following manner:

dividing the first liquid crystal image into at least two layers of second liquid crystal images, where the at least two layers of second liquid crystal images include image information of the first liquid crystal image, and any two of the at least two layers of second liquid crystal images include different image information; separately performing compression processing on the at least two layers of second liquid crystal images by decreasing a quantity of bits used to represent a single pixel of each of the at least two layers of second liquid crystal images; and fusing compressed at least two layers of second liquid crystal images to obtain the compressed first liquid crystal image.

In the foregoing design, compression processing is separately performed on all layers of liquid crystal images obtained after layer division, so that loss of a large amount of detail information due to overall compression can be reduced, thereby ensuring, to a maximum extent, consistency between a processed displayed image and an original HDR image.

In a possible design, the at least two layers of second liquid crystal images include two layers of second liquid crystal images, and the decreasing a quantity of bits used to represent a single pixel of each of the at least two layers of second liquid crystal images is implemented in the following manner:

separately performing compression processing on pixel values of the two layers of second liquid crystal images based on different compression ratios; and for any pixel whose pixel value is compressed and that is of either of the two layers of second liquid crystal images, using N bits to represent the compressed pixel value of the any pixel whose pixel value is compressed, to obtain two layers of compressed second liquid crystal images, where N is a positive integer less than a quantity of bits used to represent the any pixel whose pixel value is compressed.

Specifically, different compression ratios or a same compression ratio may be configured depending on image feature information included in the at least two layers of second liquid crystal images, and then compression processing is separately performed on pixel values of the at least two layers of second liquid crystal images based on the configured compression ratio.

In the foregoing design, depending on different image feature information included in all layers of liquid crystal images obtained after layer division, different compression ratios are configured for all the layers of liquid crystal images, and then compression processing is performed by using different compression degrees, so that loss of a large amount of detail information due to overall compression can be reduced, thereby ensuring, to a maximum extent, consistency between a processed displayed image and an original HDR image.

In a possible design, the at least two layers of second liquid crystal images include a low-frequency second liquid crystal image, and the low-frequency second liquid crystal image includes low-frequency image information of the first liquid crystal image; and before the decreasing a quantity of bits used to represent a single pixel of each of the at least two layers of second liquid crystal images, the method further includes:

performing dither processing on the low-frequency second liquid crystal image; or performing global tone mapping processing on the low-frequency second liquid crystal image; or performing global tone mapping processing on an image obtained after dither processing is performed on the low-frequency second liquid crystal image; or performing dither processing on an image obtained after global tone mapping processing is performed on the low-frequency second liquid crystal image.

Performing dither processing on the low-frequency image can remove artifacts generated in a process of compressing the image. An overall contrast of the image can be adjusted after the global tone mapping processing.

In a possible design, before the decreasing a quantity of bits used to represent a single pixel of each of the at least two layers of second liquid crystal images, the method further includes:

> performing dither processing on the at least two layers of second liquid crystal images; or
> performing global tone mapping processing on the at least two layers of second liquid crystal images; or
> separately performing global tone mapping processing on images obtained after dither processing is performed on the at least two layers of second liquid crystal images; or
> separately performing dither processing on images obtained after global tone mapping processing is performed on the at least two layers of second liquid crystal images.

In a possible design, the obtaining a high dynamic range image includes:
obtaining a to-be-processed image; and using the to-be-processed image as the high dynamic range image when a pixel bit quantity of the to-be-processed image is greater than a preset pixel bit quantity; or performing dequantization processing on the to-be-processed image when a pixel bit quantity of the to-be-processed image is less than or equal to a preset pixel bit quantity, to obtain the high dynamic range image.

Because an existing video transmission channel supports only a video codec of 8 or 10 bits, an HDR image source is compressed into an image of 8 or 10 bits in a video transmission process. How to better restore a high-bit HDR image source from the image of 8 or 10 bits is also a key problem. In this embodiment of the present invention, compatibility with an existing image of 8 or 10 bits may be implemented by using the foregoing design, to obtain the high dynamic range image.

In a possible design, before the performing dequantization processing on the to-be-processed image, the method further includes:
performing global tone mapping processing or degamma processing on the to-be-processed image, to obtain the high dynamic range image.

In a possible design, after the performing dequantization processing on the to-be-processed image, the method further includes:
performing global tone mapping processing or degamma processing on an image obtained after the dequantization processing, to obtain the high dynamic range image.

In a possible design, the dividing the high dynamic range image into a first liquid crystal image and a first backlight image includes:

> performing backlight statistics collection on the high dynamic range image to obtain the first backlight image, where a backlight value of any region in the high dynamic range image is a pixel value of a pixel that is in the first backlight image and that is corresponding to the region;
> increasing resolution of the first backlight image, and performing blurring processing on a first backlight image whose resolution is increased, to obtain a second backlight image, where the second backlight image is used to simulate an image displayed after light diffusion processing is performed, by using an optical component in the display, on the first backlight image when the first backlight image is displayed at the backlight layer; and
obtaining the first liquid crystal image by dividing the high dynamic range image based on the second backlight image.

According to a second aspect, an embodiment of the present invention provides a high dynamic range image processing apparatus, including:

> an obtaining unit, configured to obtain a high dynamic range image;
> a division unit, configured to divide the high dynamic range image obtained by the obtaining unit into a first liquid crystal image and a first backlight image;
> a first compression processing unit, configured to perform, by decreasing a quantity of bits used to represent a single pixel of the first liquid crystal image obtained by the division unit, compression processing on the first liquid crystal image, to obtain a compressed first liquid crystal image to be displayed at a liquid crystal layer of a display, where the display is configured to display the high dynamic range image; and
> a second compression processing unit, configured to perform, by decreasing a quantity of bits used to represent a single pixel of the first backlight image obtained by the division unit, compression processing on the first backlight image, to obtain a compressed first backlight image to be displayed at a backlight layer of the display.

In a possible design, the first compression processing unit is configured to:

> divide the first liquid crystal image into at least two layers of second liquid crystal images, where the at least two layers of second liquid crystal images include image information of the first liquid crystal image, and any two of the at least two layers of second liquid crystal images include different image information;
> separately perform compression processing on the at least two layers of second liquid crystal images by decreasing a quantity of bits used to represent a single pixel of each of the at least two layers of second liquid crystal images; and
> fuse compressed at least two layers of second liquid crystal images to obtain the compressed first liquid crystal image.

In a possible design, the at least two layers of second liquid crystal images include two layers of second liquid crystal images, and when decreasing the quantity of bits used to represent the single pixel of each of the at least two layers of second liquid crystal images, the first compression processing unit is configured to:

> separately perform compression processing on pixel values of the two layers of second liquid crystal images based on different compression ratios; and for any pixel whose pixel value is compressed and that is of either of the two layers of second liquid crystal images, use N bits to represent the compressed pixel value of the any pixel whose pixel value is compressed, to obtain two layers of compressed second liquid crystal images, where N is a positive integer less than a quantity of bits used to represent the any pixel whose pixel value is compressed.

Alternatively, compression processing may be separately performed on pixel values of the two layers of second liquid crystal images by using a same compression ratio.

In a possible design, the at least two layers of second liquid crystal images include a low-frequency second liquid crystal image, and the low-frequency second liquid crystal image includes low-frequency image information of the first liquid crystal image; and before decreasing the quantity of bits used to represent the single pixel of each of the at least two layers of second liquid crystal images, the first compression processing unit is further configured to:

> perform dither processing on the low-frequency second liquid crystal image; or
> perform global tone mapping processing on the low-frequency second liquid crystal image; or
> perform global tone mapping processing on an image obtained after dither processing is performed on the low-frequency second liquid crystal image; or
> perform dither processing on an image obtained after global tone mapping processing is performed on the low-frequency second liquid crystal image.

In a possible design, before decreasing the quantity of bits used to represent the single pixel of each of the at least two layers of second liquid crystal images, the first compression processing unit is further configured to:

> perform dither processing on the at least two layers of second liquid crystal images; or
> perform global tone mapping processing on the at least two layers of second liquid crystal images; or
> separately perform global tone mapping processing on images obtained after dither processing is performed on the at least two layers of second liquid crystal images; or
> separately perform dither processing on images obtained after global tone mapping processing is performed on the at least two layers of second liquid crystal images.

In a possible design, the obtaining unit is further configured to:

> obtain a to-be-processed image; and
> the apparatus further includes a bit processing unit, configured to use the to-be-processed image as the high dynamic range image when a pixel bit quantity of the to-be-processed image is greater than a pixel bit quantity of a conventional image.

In a possible design, the obtaining unit is further configured to:

> obtain a to-be-processed image; and
> the apparatus further includes a bit processing unit, configured to perform dequantization processing on the to-be-processed image when a pixel bit quantity of the to-be-processed image is less than a pixel bit quantity of a conventional image, to obtain the high dynamic range image.

In a possible design, before performing dequantization processing on the to-be-processed image, the bit processing unit is further configured to:
perform global tone mapping processing or degamma processing on the to-be-processed image.

In a possible design, after performing dequantization processing on the to-be-processed image, the bit processing unit is further configured to:
perform global tone mapping processing or degamma processing on an image obtained after the dequantization processing.

According to a third aspect, an embodiment of the present invention further provides a high dynamic range image processing apparatus, and the apparatus includes:

> a receiver, configured to obtain a high dynamic range image;
> a processor, configured to: divide the high dynamic range image into a first liquid crystal image and a first backlight image; perform compression processing on the first liquid crystal image by decreasing a quantity of bits used to represent a single pixel of the first liquid crystal image, to obtain a compressed first liquid crystal image to be displayed at a liquid crystal layer of a display, where the display is configured to display the high dynamic range image; and perform compression processing on the first backlight image by decreasing a quantity of bits used to represent a single pixel of the first backlight image, to obtain a compressed first backlight image to be displayed at a backlight layer of the display.

In a possible design, the apparatus further includes the display, and the display includes the backlight layer and the liquid crystal layer, where
the backlight layer is configured to display the first backlight image; and
the liquid crystal layer is configured to display the first liquid crystal image.

Certainly, the display may not be disposed inside the high dynamic range image processing apparatus, and may be an independent device.

In a possible design, the apparatus may further include a memory, where the memory is configured to execute a program executed by the processor, and store some configuration information. The configuration information includes an algorithm used for division and the like.

Certainly, the memory may be disposed outside the high dynamic range image processing apparatus, and may be an independent device.

In a possible design, when performing compression processing on the first liquid crystal image by decreasing the quantity of bits used to represent the single pixel of the first liquid crystal image, the processor is specifically configured to:

divide the first liquid crystal image into at least two layers of second liquid crystal images, where the at least two layers of second liquid crystal images include image information of the first liquid crystal image, and any two of the at least two layers of second liquid crystal images include different image information;
separately perform compression processing on the at least two layers of second liquid crystal images by decreasing a quantity of bits used to represent a single pixel of each of the at least two layers of second liquid crystal images; and
fuse compressed at least two layers of second liquid crystal images to obtain the compressed first liquid crystal image.

In a possible design, the at least two layers of second liquid crystal images include two layers of second liquid crystal images, and when decreasing the quantity of bits used to represent the single pixel of each of the at least two layers of second liquid crystal images, the processor is configured to:

separately perform compression processing on pixel values of the at least two layers of second liquid crystal images based on different compression ratios; and
for any pixel whose pixel value is compressed and that is of either of the two layers of second liquid crystal images, use N bits to represent the compressed pixel value of the any pixel whose pixel value is compressed, to obtain two layers of compressed second liquid crystal images, where N is a positive integer less than a quantity of bits used to represent the any pixel whose pixel value is compressed.

In a possible design, the at least two layers of second liquid crystal images include a low-frequency second liquid crystal image, and the low-frequency second liquid crystal image includes low-frequency image information of the first liquid crystal image; and
before decreasing the quantity of bits used to represent the single pixel of each of the at least two layers of second liquid crystal images, the processor is further configured to:

perform dither processing on the low-frequency second liquid crystal image; or
perform global tone mapping processing on the low-frequency second liquid crystal image; or
perform global tone mapping processing on an image obtained after dither processing is performed on the low-frequency second liquid crystal image; or
perform dither processing on an image obtained after global tone mapping processing is performed on the low-frequency second liquid crystal image.

In a possible design, before decreasing the quantity of bits used to represent the single pixel of each of the at least two layers of second liquid crystal images, the processor is further configured to:

perform dither processing on the at least two layers of second liquid crystal images; or
perform global tone mapping processing on the at least two layers of second liquid crystal images; or
separately perform global tone mapping processing on images obtained after dither processing is performed on the at least two layers of second liquid crystal images; or
separately perform dither processing on images obtained after global tone mapping processing is performed on the at least two layers of second liquid crystal images.

In a possible design, the receiver is further configured to:

obtain a to-be-processed image; and
the processor is further configured to use, when a pixel bit quantity of the to-be-processed image obtained by the receiver is greater than a preset pixel bit quantity, the to-be-processed image as the high dynamic range image.

In a possible design, the receiver is further configured to:

obtain a to-be-processed image; and
the processor is further configured to perform, when a pixel bit quantity of the to-be-processed image obtained by the receiver is less than or equal to a preset pixel bit quantity, dequantization processing on the to-be-processed image, to obtain the high dynamic range image.

In a possible design, when dividing the high dynamic range image into the first liquid crystal image and the first backlight image, the processor is configured to:

perform backlight statistics collection on the high dynamic range image to obtain the first backlight image, where a backlight value of any region in the high dynamic range image is a pixel value of a pixel that is in the first backlight image and that is corresponding to the region;

increase resolution of the first backlight image, and perform blurring processing on a first backlight image whose resolution is increased, to obtain a second backlight image, where the second backlight image is used to simulate an image displayed after light diffusion processing is performed, by using an optical component in the display, on the first backlight image when the first backlight image is displayed at the backlight layer; and

obtain the first liquid crystal image by dividing the high dynamic range image based on the second backlight image.

According to a fourth aspect, an embodiment of the present invention provides a computer readable storage medium storing one or more programs, the one or more programs include an instruction, and when the instruction is executed by an electronic device, the electronic device performs any method in the first aspect.

In a conventional HDR processing technology, compression processing is first performed on an HDR image and then backlight control processing is performed. In this way, a large quantity of image details of a displayed HDR image are lost. Backlight control processing is performed on a compressed image, and therefore the backlight control processing can only be used to simulate the compressed image in a processing process. This may result in inconsistency between a finally processed displayed image and the original HDR image. In this embodiment of the present invention, layer division processing is directly performed on the HDR image, and then backlight control processing is performed on a backlight image obtained after layer division, so that loss of a large amount of detail information due to compression can be avoided. Compression processing is performed, by using different compression degrees, on all layers of liquid crystal images obtained after layer division, so that loss of a large amount of detail information due to overall compression can be reduced, thereby ensuring, to a maximum extent, consistency between a processed displayed image and the original HDR image.

## BRIEF DESCRIPTION OF DRAWINGS

FIG. 1 is a schematic diagram of mapping from high dynamic range light information in the real world to low dynamic range light information of a displayed image on a display according to an embodiment of the present invention;
FIG. 2 is a schematic structural diagram of a display according to an embodiment of the present invention;
FIG. 3 is a schematic diagram of coding of a 16-bit half-precision floating point type according to an embodiment of the present invention;
FIG. 4 is a flowchart of a high dynamic range image processing method according to an embodiment of the present invention;
FIG. 5 is a procedure of a high dynamic range image obtaining method according to an embodiment of the present invention;
FIG. 6A and FIG. 6B are a schematic diagram of a high dynamic range image processing method according to an embodiment of the present invention;
FIG. 7 is a schematic diagram of a processing method for dividing a high dynamic range image into three layers according to an embodiment of the present invention;
FIG. 8 is a schematic diagram of a high-bit base layer liquid crystal image processing method according to an embodiment of the present invention;
FIG. 9 is a schematic diagram of a high-bit detail layer liquid crystal image processing method according to an embodiment of the present invention;
FIG. 10A and FIG. 10B are a schematic diagram of a processing method for dividing a high dynamic range image into four layers according to an embodiment of the present invention;
FIG. 11 is a schematic diagram of a high dynamic range image processing apparatus according to an embodiment of the present invention; and
FIG. 12 is a schematic diagram of another high dynamic range image processing apparatus according to an embodiment of the present invention.

## DESCRIPTION OF EMBODIMENTS

To make the objectives, technical solutions, and advantages of the present invention clearer, the following further describes the present invention in detail with reference to the accompanying drawings. Apparently, the described embodiments are merely some rather than all of the embodiments of the present invention. All other embodiments obtained by persons of ordinary skill in the art based on the embodiments of the present invention without creative efforts shall fall within the protection scope of the present invention.

The embodiments of the present invention provide a high dynamic range image processing method and apparatus, to resolve a prior-art problem of displayed-image distortion. The method and the apparatus are conceived based on a same invention. The method and the apparatus have similar principles for resolving problems. Therefore, for implementation of the apparatus and the method, refer to each other. Details of repeated parts are not described.

A low-resolution image involved in the embodiments of the present invention is related to a quantity of backlight partitions. Generally, a consumer level includes no more than 24×10 backlight partitions, and a high-performance laboratory environment includes no more than 256×144 backlight partitions. A high-resolution image is an image whose resolution is slightly different from or the same as that of a common liquid crystal display. For example, the resolution is 720P (1280×720), 1080P (1920×1080), or 4K (4096×2160 or 3840×2160).

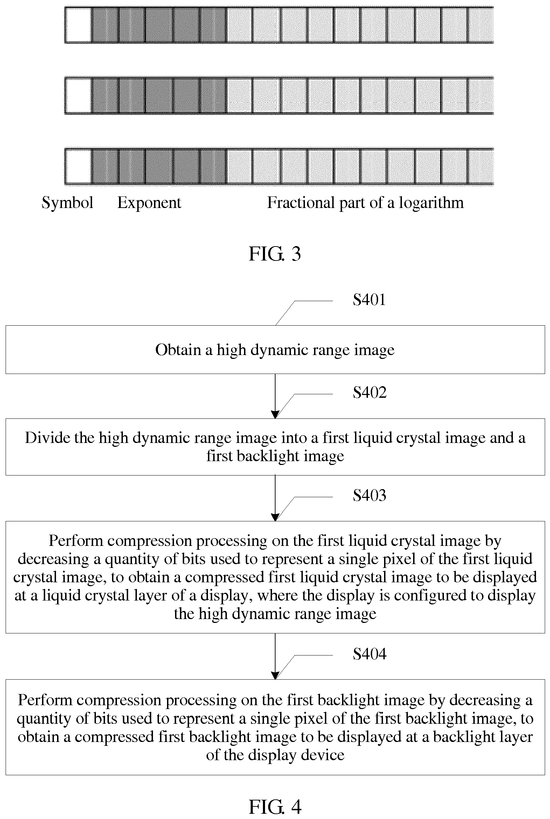

A coding format of a high dynamic range image involved in the embodiments of the present invention may be OpenEXR, and a file name extension of OpenEXR is .exr, and is of a 16-bit half-precision floating point type similar to an IEEE floating point type. Referring to FIG. 3, FIG. 3 is a schematic diagram of coding of the 16-bit half-precision floating point type. The following formula is a formula of converting from a half-precision floating point number used for coding:

$$ h = \begin{cases} (-1)^S 2^{E-15}(1+\dfrac{M}{1024}) & 1 \le E \le 30 \\ (-1)^S 2^{-14}(\dfrac{M}{1024}) & E=30 \end{cases} $$

S represents a symbol bit, E represents an exponent, and $M$ is a fractional part.

Because OpenEXR can indicate a positive value and a negative value, OpenEXR covers an entire range of visible light, and basically meets an HDR image requirement.

Tone mapping algorithms involved in the embodiments of the present invention may be classified into three categories based on a universal classification method: a global algorithm, a local algorithm, and a hybrid algorithm. The hybrid algorithm is a combination of the global algorithm and the local algorithm, and has a better effect than the global algorithm and the local algorithm.

Local dimming technologies involved in the embodiments of the present invention are classified into 0-D local dimming, 1-D local dimming, and 2-D local dimming. In the 0-D local dimming, backlight luminance is adjusted integrally. In the 1-D local dimming, luminance of different rows may be adjusted. In the 2-D local dimming, partitioning processing may be performed based on backlight, to dynamically adjust backlight luminance of different partitions, thereby reducing power consumption of a display while increasing a dynamic range of a displayed image. Currently, the 2-D local dimming is the most widely used backlight control method with the best effect.

A bit quantity of a low-bit image involved in the embodiments of the present invention is equal to a bit quantity of a conventional image, and is usually 8 or 10 bits. A high-bit image is an HDR image, and is usually 16-bit half-precision floating point data or 32-bit floating point data.

The embodiments of the present invention are applicable to a display that can implement a local dimming technology, for example, an LED backlight display, and the display is usually a double-layer structure, and includes a backlight layer and a liquid crystal layer.

The backlight layer generally displays low-frequency information of an image, and has relatively low resolution. Specific resolution is determined by a quantity of backlight partitions. The liquid crystal layer displays remaining information of the image after backlight information is removed, and has relatively high resolution, and the resolution is usually 720P, 1080P, or 4K.

An embodiment of the present invention provides a high dynamic range image processing method. Referring to FIG. 4, the method includes the following steps.

S401. Obtain a high dynamic range image.

Resolution of the high dynamic range image is the same as resolution of a liquid crystal layer of a display configured to display the high dynamic range image.

S402: Divide the high dynamic range image into a first liquid crystal image and a first backlight image.

Optionally, the dividing the high dynamic range image into a first liquid crystal image and a first backlight image may be implemented in the following manner:

performing backlight statistics collection on the high dynamic range image to obtain the first backlight image, where a backlight value of any region in the high dynamic range image is a pixel value of a pixel that is in the first backlight image and that is corresponding to the region;
increasing resolution of the first backlight image, and performing blurring processing on a first backlight image whose resolution is increased, to obtain a second backlight image, where the second backlight image is used to simulate an image displayed after light diffusion processing is performed, by using an optical component in the display, on the first backlight image when the first backlight image is displayed at a backlight layer; and
obtaining the first liquid crystal image by dividing the high dynamic range image based on the second backlight image.

The resolution of the first backlight image is slightly different from or the same as resolution of the backlight layer of the display configured to display the high dynamic range image. The first backlight image is a low-resolution image.

The performing backlight statistics collection on the high dynamic range image specifically includes: collecting statistics about backlight luminance values of different partitions of the high dynamic range image. In other words, one partition corresponds to one backlight luminance value, so as to obtain an image including the backlight luminance values, and the image is referred to as the first backlight image. It may be considered that the first backlight image includes only the backlight luminance values, and the first backlight image is a low-resolution image whose resolution is the same as a quantity of backlight partitions.

There are a plurality of methods for collecting statistics about the backlight luminance values of the different partitions of the high dynamic range image, and the methods may include but are not limited to the following methods: an average value method, a square root method, a maximum value method, and a mapping function inversion method. The methods for collecting statistics about the backlight luminance values of the different partitions of the high dynamic range image are not limited in this embodiment of the present invention. Another prior-art method for collecting statistics about backlight luminance values of different partitions of an image is also applicable to this embodiment of the present invention.

The following briefly describes various methods for collecting statistics about the backlight luminance values of the different partitions of the high dynamic range image.

In the average value method, an average value of backlight luminance values of all pixels included in a region is specifically used as a backlight luminance value of the region.

In the square root method, a square root value of an average value of backlight luminance values of all pixels included in a region is specifically used as a backlight luminance value of the region.

In the maximum value method, a maximum value of backlight luminance values of all pixels included in a region is specifically used as a backlight luminance value of the region.

In the mapping function inversion method, a histogram of an entire image is obtained through statistics collection, a cumulative distribution function of the histogram is obtained, and then an inverse function of the cumulative distribution function is used as an inverse function of a mapping function. Statistics about an average value of backlight luminance values of all pixels included in each region are collected, and then the obtained average value of each region is input into the inverse function of the mapping function, to obtain a backlight luminance value of each region. Different image frames have different cumulative distribution function curves, and an optimal backlight luminance value may be obtained based on different features of all frames of input images.

The second backlight image is a high-resolution image, and resolution of the second backlight image may be, for example, 720P, 1080P, or 4K.

The obtained second backlight image is a simulated high-resolution liquid crystal image, and specific resolution may be 720P, 1080P, 4K, or the like.

Light diffusion processing, performed by the optical component on the first backlight image when the first backlight image is displayed, may be simulated by using a light diffusion function, to obtain the second backlight image. The light diffusion function describes light transmission performance that light emitted from an LED is incident to a liquid crystal display after being diffused by a diffusion film (board) for a plurality of times. Light luminance of each pixel that is incident to the liquid crystal display can be accurately learned by using the light diffusion function, so as to accurately compensate for a liquid crystal pixel.

There are a plurality of light diffusion functions used for simulating light diffusion. In this embodiment of the present invention, an interpolation method and a blur-mask method are used as an example for description. However, another prior-art method for a light diffusion function used for simulating light diffusion also falls within the protection scope of the embodiments of the present invention, and details are not described herein in this embodiment of the present invention.

The interpolation method can be used to perform interpolation on a low-resolution image to obtain a high-resolution image.

In the blur-mask method, a low-resolution image is first extended. Specifically, a pixel quantity of the image is doubled horizontally and vertically, blurring processing is performed by using a low-pass filter, and the foregoing steps are repeated, to obtain a high-resolution image whose resolution is the same as the resolution of the liquid crystal layer of the display. An iteration process is involved herein, and a table lookup manner of displaying a look-up table (English: Look-Up-Table, LUT for short) may be used to replace the foregoing iteration process. The look-up table stores a mapping relationship between a low-resolution image and a final high-resolution image, and is more convenient for hardware implementation.

The obtaining the first liquid crystal image by dividing the high dynamic range image based on the second backlight image may be implemented in the following manner:

obtaining the first liquid crystal image after performing a subtraction operation on a pixel luminance value of the high dynamic range image and a pixel luminance value corresponding to the second backlight image; or obtaining the first liquid crystal image after performing a division operation on a pixel luminance value of the high dynamic range image and a pixel luminance value corresponding to the second backlight image.

S403. Perform compression processing on the first liquid crystal image by decreasing a quantity of bits used to represent a single pixel of the first liquid crystal image, to obtain a compressed first liquid crystal image to be displayed at a liquid crystal layer of a display, where the display is configured to display the high dynamic range image.

S404. Perform compression processing on the first backlight image by decreasing a quantity of bits used to represent a single pixel of the first backlight image, to obtain a compressed first backlight image to be displayed at a backlight layer of the display.

A sequence of performing step S403 and step S404 is not specifically limited in this embodiment of the present invention.

Optionally, in this embodiment of the present invention, the obtained first backlight image may further be processed, and specifically, resolution of the first backlight image is processed. This may be specifically implemented in the following manner:

performing light diffusion processing on the first backlight image by using an optical component to obtain a high-resolution third backlight image, where the third backlight image is used to overlap the compressed first liquid crystal image for displaying.

According to the solution provided in this embodiment of the present invention, layer division processing is performed on an HDR image (for example, 16 bits) to obtain a backlight layer image and a liquid crystal layer image, then dimming is performed on the backlight layer image, the liquid crystal layer image is compensated for, and the two layers of images are overlaid to obtain a final image that can be displayed by a display. Therefore, an obtained image used for a local dimming module is a to-be-compressed high-bit image, a large quantity of image details are reserved, and a finally displayed image effect is used to simulate the high-bit image. This ensures, to a maximum extent, that an HDR image displayed after processing is consistent with an original HDR image source, and image distortion is reduced.

Optionally, the performing compression processing on the first liquid crystal image by decreasing a quantity of bits used to represent a single pixel of the first liquid crystal image may be implemented in the following manner:

dividing the first liquid crystal image into at least two layers of second liquid crystal images, where the at least two layers of second liquid crystal images include image information of the first liquid crystal image, and any two of the at least two layers of second liquid crystal images include different image information;

separately performing compression processing on the at least two layers of second liquid crystal images by decreasing a quantity of bits used to represent a single pixel of each of the at least two layers of second liquid crystal images; and

fusing compressed at least two layers of second liquid crystal images to obtain the compressed first liquid crystal image.

Specifically, the first liquid crystal image may be divided into the at least two layers of second liquid crystal images by using at least one local tone mapping algorithm.

There are a plurality of local tone mapping algorithms used for layer division, for example, bilateral filtering (Bilateral filter) and guided filtering (Guided Filter).

The bilateral filtering means that an image intensity value is introduced as an input parameter of a bilateral filter on the basis of Gaussian filtering and both an image spatial location and image intensity information are considered, so that the bilateral filtering can improve compatibility between the image spatial location and an image pixel intensity value, and has a function of well reserving an image edge. Layer division processing is performed on the image without generating obvious artifacts (artifacts), and the image is divided into at least two layers.

The artifacts include contouring (conturing), a halo (Halo), banding (banding), and the like.

The bilateral filtering is used as an example in the foregoing solution for description, but the foregoing solution is not limited to this method, and another local tone mapping method also falls within the protection scope of this patent.

Optionally, the at least two layers of second liquid crystal images include two layers of second liquid crystal images, and the decreasing a quantity of bits used to represent a single pixel of each of the at least two layers of second liquid crystal images includes:

separately performing compression processing on pixel values of the two layers of second liquid crystal images based on different compression ratios; and for any pixel whose pixel value is compressed and that is of either of the two layers of second liquid crystal images, using N bits to represent the compressed pixel value of the any pixel whose pixel value is compressed, to obtain two layers of compressed second liquid crystal images, where N is a positive integer less than a quantity of bits used to represent the any pixel whose pixel value is compressed.

A pixel value change in a compression process may be implemented through table lookup.

Specifically, the compression ratios are preconfigured depending on image feature information included in the at least two layers of second liquid crystal images. More image detail features included in the second liquid crystal image indicate a smaller compression degree.

For example, two layers of second liquid crystal images are obtained after processing. One layer of second liquid crystal image includes basic feature information included in the first liquid crystal image, for example, some low-frequency information. For ease of description, the one layer of second liquid crystal image is referred to as a base layer image. The other layer of second liquid crystal image includes detail feature information included in the first liquid crystal image, for example, high-frequency information. For ease of description, the other layer of second liquid crystal image is referred to as a detail layer image. Because a detail layer liquid crystal image includes a relatively large quantity of image detail features, a compression degree is less than a compression degree of a base layer liquid crystal image.

Optionally, the fusing compressed at least two layers of second liquid crystal images to obtain the compressed first liquid crystal image may be implemented in the following manner.

Fusing processing may first be performed on the compressed at least two layers of second liquid crystal images, and then conventional post processing is performed, to obtain the compressed first liquid crystal image.

Conventional post processing methods include sharpness (Sharpness), dynamic contrast improvement (English: Dynamic Contrast Improvement, DCI for short), and the like.

Optionally, the at least two layers of second liquid crystal images include a low-frequency second liquid crystal image, and the low-frequency second liquid crystal image includes low-frequency image information of the first liquid crystal image. Before the quantity of bits used to represent the single pixel of each of the at least two layers of second liquid crystal images is decreased, the following processing may be further performed on the low-frequency second liquid crystal image:

    performing dither processing on the low-frequency second liquid crystal image; or
    performing global tone mapping processing on the low-frequency second liquid crystal image; or
    performing global tone mapping processing on an image obtained after dither processing is performed on the low-frequency second liquid crystal image; or
    performing dither processing on an image obtained after global tone mapping processing is performed on the low-frequency second liquid crystal image.

For ease of description, the low-frequency second liquid crystal image is referred to as a base layer image in this embodiment of the present invention.

Performing dither processing on the base layer image can remove artifacts generated in a process of compressing the image.

An overall contrast of the image can be adjusted after the global tone mapping processing.

Optionally, before the decreasing a quantity of bits used to represent a single pixel of each of the at least two layers of second liquid crystal images, the method further includes: performing dither processing on the at least two layers of second liquid crystal images; or performing global tone mapping processing on the at least two layers of second liquid crystal images; or separately performing global tone mapping processing on images obtained after dither processing is performed on the at least two layers of second liquid crystal images; or

separately performing dither processing on images obtained after global tone mapping processing is performed on the at least two layers of second liquid crystal images.

Because an existing video transmission channel supports only a video codec of 8 or 10 bits, an HDR image source is compressed into an image of 8 or 10 bits in a video transmission process. How to better restore a high-bit HDR image source from the image of 8 or 10 bits is also a key problem. In this embodiment of the present invention, compatibility with an existing image of 8 or 10 bits may be implemented by using the following algorithm, to obtain the high dynamic range image:

obtaining a to-be-processed image; and using the to-be-processed image as the high dynamic range image when a pixel bit quantity of the to-be-processed image is greater than a pixel bit quantity of a conventional image, or performing dequantization processing on the to-be-processed image when a pixel bit quantity of the to-be-processed image is less than a pixel bit quantity of a conventional image, to obtain the high dynamic range image.

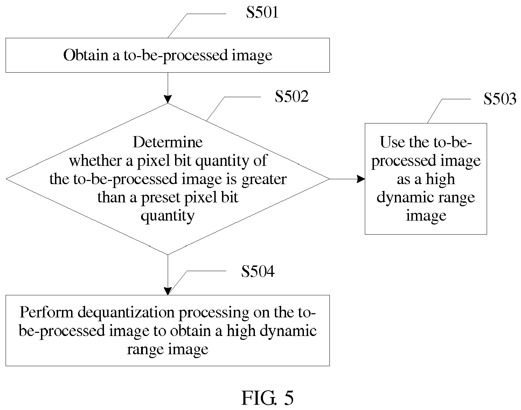

Specifically, as shown in FIG. 5, the following steps are included.

S501. Obtain a to-be-processed image.

S502. Determine whether a pixel bit quantity of the to-be-processed image is greater than a preset pixel bit quantity, and if the pixel bit quantity of the to-be-processed image is greater than the preset pixel bit quantity, S303 is performed, or if the pixel bit quantity of the to-be-processed image is not greater than the preset pixel bit quantity, S304 is performed. The preset pixel bit quantity is the same as a bit quantity of a conventional image, and may be 10 bits.

S503. Use the to-be-processed image as a high dynamic range image.

S504. Perform dequantization processing on the to-be-processed image to obtain a high dynamic range image.

A dequantization method may include but is not limited to a flooding (Flooding) algorithm, a dither (dither) algorithm, a filtering (Filtering) method, and the like. Another dequantization method in the prior art is also applicable to this embodiment of the present invention, and details are not described herein in this embodiment of the present invention.

Flooding means to determine a flooding direction based on image content information, and then perform dequantization based on a minimization cost function. Dither means to perform dequantization by randomly adding disturbance. Filtering means to perform dequantization by simulating flooding by using a filter. An HDR image can be well restored by using the foregoing dequantization algorithms.

Optionally, in step S504, when the high dynamic range image is obtained, global tone mapping processing or degamma processing may further be performed on the to-be-processed image.

Specifically, global tone mapping processing or degamma processing may be performed on the to-be-processed image before dequantization processing is performed on the to-be-processed image; or after dequantization processing is performed on the to-be-processed image, global tone mapping processing or degamma processing may be performed on an image obtained after the dequantization processing.

In a conventional HDR processing technology, compression processing is first performed on an HDR image and then backlight control processing is performed. In this way, a large quantity of image details of a displayed HDR image are lost. Backlight control processing is performed on a compressed image, and therefore the backlight control processing can only be used to simulate the compressed image in a processing process. This may result in inconsistency between a finally processed displayed image and the original HDR image. In this embodiment of the present invention, layer division processing is directly performed on the HDR image, and then backlight control processing is performed on a backlight image obtained after layer division, so that loss of a large amount of detail information due to compression can be avoided. Compression processing is performed, by using different compression degrees, on all layers of liquid crystal images obtained after layer division, so that loss of a large amount of detail information due to overall compression can be reduced, thereby ensuring, to a maximum extent, consistency between a processed displayed image and the original HDR image.

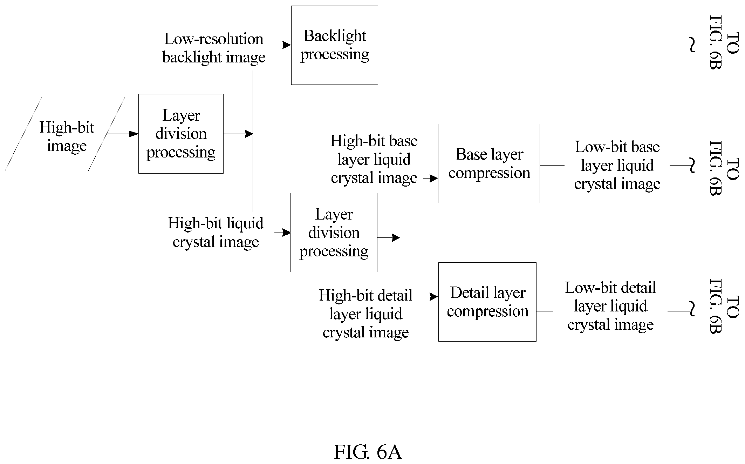

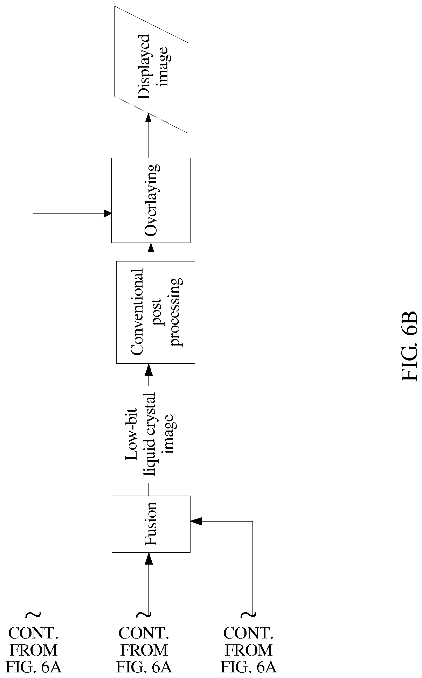

As shown in FIG. 6A and FIG. 6B, for example, an HDR image is divided into three layers below for description.

It is assumed that the HDR image is to be processed, and the HDR image needs to be processed and then displayed. A processing procedure is as follows:

 A1: Obtain the HDR image. A common HDR image is a high-bit image. For ease of description, the HDR image is referred to as a high-bit image.
 A2: Perform layer division processing on the HDR image to obtain a first backlight image and a first liquid crystal image.

The first backlight image includes only a backlight luminance value of each partition obtained after backlight partitioning, and therefore is a low-resolution image. Herein, for ease of description, the first backlight image is referred to as a low-resolution backlight image. Resolution of the low-resolution backlight image is slightly different from or the same as resolution of a backlight layer of a display. A bit quantity of the obtained first liquid crystal image is greater than a bit quantity of a conventional image. Therefore, for ease of description, the first liquid crystal image is referred to as a high-bit liquid crystal image in this embodiment of the present invention. Resolution of the high-bit liquid crystal image is slightly different from resolution of a liquid crystal layer image of the display, and is usually 720P, 1080P, 4K, or the like. In this embodiment of the present invention, that resolution of a high-resolution image is the same as the resolution of the liquid crystal layer image of the display is used as an example.

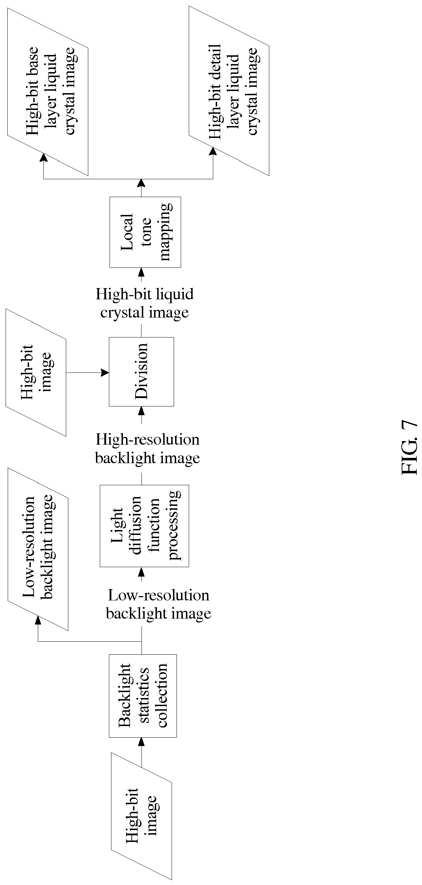

Specifically, referring to FIG. 7, the performing layer division processing on the HDR image to obtain a low-resolution backlight image and a high-bit liquid crystal image may be implemented in the following manner.

 B 1: Perform backlight statistics collection on the HDR image to obtain the low-resolution backlight image.

For a backlight statistics collection manner, refer to the manner described in the embodiment corresponding to FIG. 2. Details are not described again in this embodiment of the present invention.

 B2: Process the low-resolution backlight image by using a light diffusion function used for simulating light diffusion, to obtain a simulated high-resolution backlight image whose resolution is the same as that of a liquid crystal display on which the HDR image is to be displayed. The resolution of the high-resolution backlight image is usually 720P, 1080P, 4K, or the like.
 B3: Obtain the high-bit liquid crystal image by dividing the high-bit image based on the high-resolution backlight image.

The high-bit liquid crystal image is obtained after a subtraction operation is performed on a pixel luminance value of the high-bit image and a pixel luminance value corresponding to the high-resolution backlight image; or the high-bit liquid crystal image is obtained after a division operation is performed on a pixel luminance value of the high-bit image and a pixel luminance value corresponding to the high-resolution backlight image. The resolution of the high-bit liquid crystal image is the same as resolution of a liquid crystal layer.

 A3: Perform layer division processing on the high-bit liquid crystal image to obtain two layers of second liquid crystal images.

One of the two layers of second liquid crystal images includes basic feature information such as low-frequency information of the first liquid crystal image. In addition, a pixel bit quantity of the second liquid crystal image is greater than a pixel bit quantity (8 or 10 bits) of a conventional image, so that this layer of second liquid crystal image is referred to as a high-bit base layer liquid crystal image. The other layer of second liquid crystal image includes detail feature information such as high-frequency information of the first liquid crystal image, and the other layer of second liquid crystal image is referred to as a high-bit detail layer liquid crystal image.

Specifically, layer division processing is performed on the high-bit liquid crystal image by using a local tone mapping algorithm to obtain the high-bit base layer liquid crystal image and the high-bit detail layer liquid crystal image.

 A4: Separately process and then overlay the low-resolution backlight image, the high-bit base layer liquid crystal image, and the high-bit detail layer liquid crystal image, to obtain a displayed image.

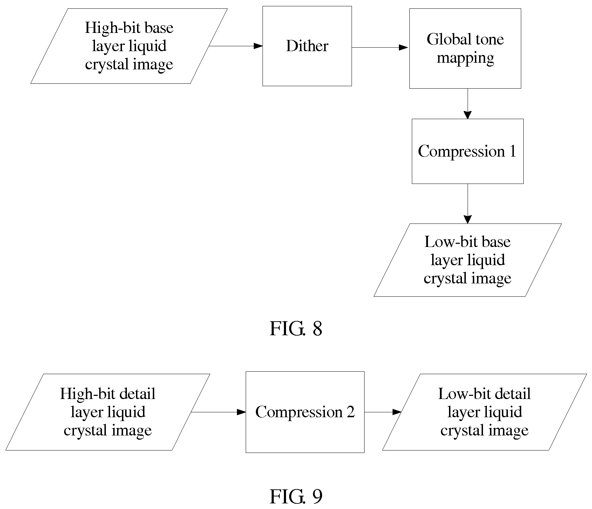

Specifically, light diffusion processing is performed on the low-resolution backlight image by using an optical component, to obtain a displayed high-resolution backlight image. Resolution of the high-resolution backlight image is the same as the resolution of the liquid crystal layer of the display. For a backlight processing manner, refer to the manner described in the embodiment corresponding to FIG. 4. Details are not described again in this embodiment of the present invention. Base layer compression processing is performed on the high-bit base layer liquid crystal image, to obtain a low-bit base layer liquid crystal image. For example, as shown in FIG. 8, global tone mapping processing is performed on a high-bit base layer liquid crystal image, dither processing is performed on an image obtained after the global tone mapping processing, and then compression processing 1 is performed to obtain a low-bit base layer image.

Detail layer compression processing is performed on the high-bit detail layer liquid crystal image, to obtain a low-bit detail layer liquid crystal image. For example, as shown in FIG. 9, compression processing 2 is performed on a high-bit detail layer liquid crystal image, to obtain a low-bit detail layer image. A compression ratio configured for the compression 1 is greater than a compression ratio configured for the compression 2. Certainly, dither processing and global tone mapping processing may further be performed before compression processing 2 is performed on the high-bit detail layer liquid crystal image. Then, the displayed high-resolution backlight image, low-bit base layer liquid crystal image, and low-bit detail layer liquid crystal image are overlaid to obtain the displayed image.

Alternatively, the low-bit base layer liquid crystal image and the low-bit detail layer liquid crystal image may be first fused, then conventional post processing is performed, and then a low-bit image obtained after the post processing and the high-resolution backlight image are overlaid to obtain the displayed image.

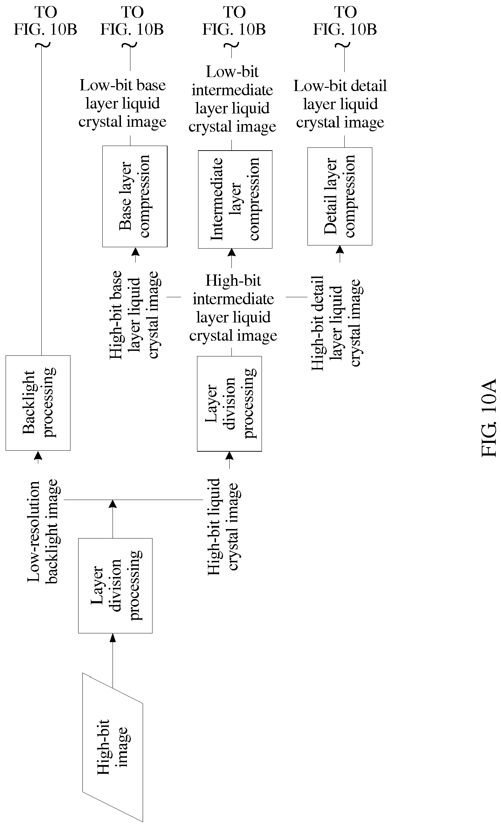

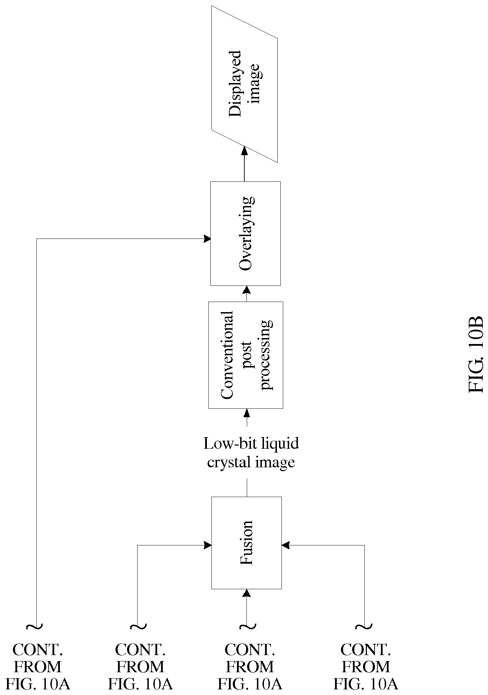

Certainly, in this embodiment of the present invention, the HDR image is not limited to being divided into three layers, and may also be divided into four or more layers. For example, as shown in FIG. 10A and FIG. 10B, an HDR image is divided into four layers, including a low-resolution backlight image, a high-bit base layer liquid crystal image, a high-bit intermediate layer liquid crystal image, and a high-bit detail layer liquid crystal image. The high-bit base layer liquid crystal image, the high-bit intermediate layer liquid crystal image, and the high-bit detail layer liquid crystal image include different feature information of a liquid crystal image.

During layer division processing, the HDR image may be divided into the low-resolution backlight image and a high-bit liquid crystal image. Then, the high-bit liquid crystal image may further be divided into the high-bit base layer liquid crystal image, the high-bit intermediate layer liquid crystal image, and the high-bit detail layer liquid crystal image by using a local tone mapping algorithm. Alternatively, the high-bit liquid crystal image may further be divided into the high-bit base layer liquid crystal image and the first high-bit detail layer liquid crystal image by using one local tone mapping algorithm, and then the first high-bit detail layer liquid crystal image is further divided into the high-bit intermediate layer liquid crystal image and a second high-bit detail layer liquid crystal image by using another local tone mapping algorithm. A quantity of used local tone mapping algorithms is not limited in this embodiment of the present invention. Certainly, the high-bit liquid crystal image may be divided into a plurality of layers of images by using a plurality of local tone mapping algorithms, and then compression processing is separately performed on the plurality of layers of images. Different compression ratios are used when compression processing is performed on the plurality of layers of images, and the different compression ratios may be specifically configured depending on included feature information.

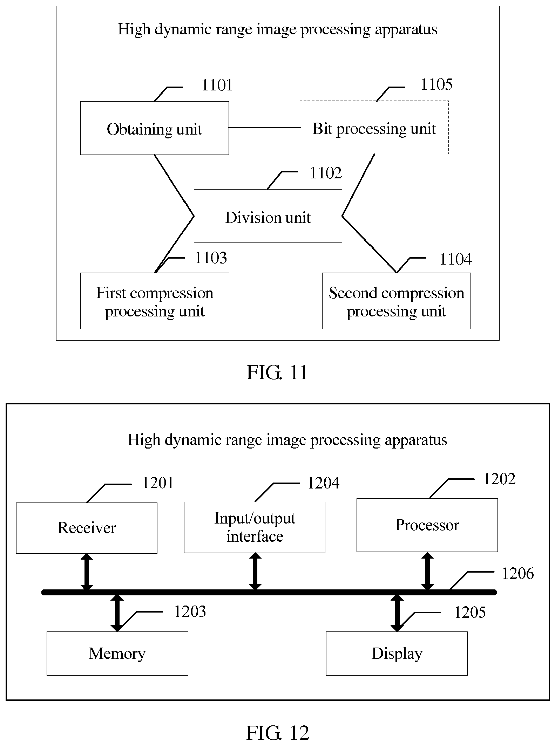

Based on a same inventive concept as the foregoing method embodiment, an embodiment of the present invention provides a high dynamic range image processing apparatus. As shown in FIG. 11, the apparatus includes:

 an obtaining unit 1101, configured to obtain a high dynamic range image;
 a division unit 1102, configured to divide the high dynamic range image obtained by the obtaining unit into a first liquid crystal image and a first backlight image;
 a first compression processing unit 1103, configured to perform, by decreasing a quantity of bits used to represent a single pixel of the first liquid crystal image obtained by the division unit 1102, compression processing on the first liquid crystal image, to obtain a compressed first liquid crystal image to be displayed at a liquid crystal layer of a display, where the display is configured to display the high dynamic range image; and
 a second compression processing unit 1104, configured to perform, by decreasing a quantity of bits used to represent a single pixel of the first backlight image obtained by the division unit 1102, compression processing on the first backlight image, to obtain a compressed first backlight image to be displayed at a backlight layer of the display.

Optionally, the first compression processing unit 1103 is configured to:

divide the first liquid crystal image into at least two layers of second liquid crystal images, where the at least two layers of second liquid crystal images include image information of the first liquid crystal image, and any two of the at least two layers of second liquid crystal images include different image information;

separately perform compression processing on the at least two layers of second liquid crystal images by decreasing a quantity of bits used to represent a single pixel of each of the at least two layers of second liquid crystal images; and

fuse compressed at least two layers of second liquid crystal images to obtain the compressed first liquid crystal image.

Optionally, the at least two layers of second liquid crystal images include two layers of second liquid crystal images, and when decreasing the quantity of bits used to represent the single pixel of each of the at least two layers of second liquid crystal images, the first compression processing unit 1103 is configured to:

separately perform compression processing on pixel values of the two layers of second liquid crystal images based on different compression ratios; and

for any pixel whose pixel value is compressed and that is of either of the two layers of second liquid crystal images, use N bits to represent the compressed pixel value of the any pixel whose pixel value is compressed, to obtain two layers of compressed second liquid crystal images, where N is a positive integer less than a quantity of bits used to represent the any pixel whose pixel value is compressed.

Alternatively, compression processing may be separately performed on pixel values of the two layers of second liquid crystal images by using a same compression ratio. This is not specifically limited in this embodiment of the present invention.

Optionally, the at least two layers of second liquid crystal images include a low-frequency second liquid crystal image, and the low-frequency second liquid crystal image includes low-frequency image information of the first liquid crystal image; and before decreasing the quantity of bits used to represent the single pixel of each of the at least two layers of second liquid crystal images, the first compression processing unit 1103 is further configured to:

perform dither processing on the low-frequency second liquid crystal image; or

perform global tone mapping processing on the low-frequency second liquid crystal image; or

perform global tone mapping processing on an image obtained after dither processing is performed on the low-frequency second liquid crystal image; or perform dither processing on an image obtained after global tone mapping processing is performed on the low-frequency second liquid crystal image.

Before decreasing the quantity of bits used to represent the single pixel of each of the at least two layers of second liquid crystal images, the first compression processing unit 1103 is further configured to: perform dither processing on the at least two layers of second liquid crystal images; or perform global tone mapping processing on the at least two layers of second liquid crystal images; or separately perform global tone mapping processing on images obtained after dither processing is performed on the at least two layers of second liquid crystal images; or separately perform dither processing on images obtained after global tone mapping processing is performed on the at least two layers of second liquid crystal images.

Because an existing video transmission channel supports only a video codec of 8 or 10 bits, an HDR image source is compressed into an image of 8 or 10 bits in a video transmission process. How to better restore a high-bit HDR image source from the image of 8 or 10 bits is also a key problem. In this embodiment of the present invention, compatibility with an existing image of 8 or 10 bits may be implemented by using the following algorithm, to obtain the high dynamic range image.

Optionally, the obtaining unit 1101 is further configured to obtain a to-be-processed image.

The apparatus further includes a bit processing unit 1105, configured to use the to-be-processed image as the high dynamic range image when a pixel bit quantity of the to-be-processed image is greater than a preset pixel bit quantity.

Optionally, the bit processing unit 1105 is further configured to perform dequantization processing on the to-be-processed image when a pixel bit quantity of the to-be-processed image is less than or equal to a preset pixel bit quantity, to obtain the high dynamic range image.

Optionally, before performing dequantization processing on the to-be-processed image, the bit processing unit 1105 is further configured to:

perform global tone mapping processing or degamma processing on the to-be-processed image.

Optionally, after performing dequantization processing on the to-be-processed image, the bit processing unit 1105 is further configured to:

perform global tone mapping processing or degamma processing on an image obtained after the dequantization processing.

The high dynamic range image can be better restored after the global tone mapping processing or the degamma processing.

Unit division in this embodiment of the present invention is an example, is only logical function division, and may be another division manner in actual implementation. In addition, functional units in the embodiments of this application may be integrated into one processor, or may exist alone physically, or two or more units may be integrated into one unit. The integrated unit may be implemented in a form of hardware, or may be implemented in a form of a software functional module.

When the integrated unit may be implemented in a form of hardware, as shown in FIG. 12, the high dynamic range image processing apparatus includes a receiver 1201 and a processor 1202. The processor 1202 may be a central processing unit (English: central processing unit, CPU for short), a digital processing unit, or the like. The high dynamic range image processing apparatus further includes a memory 1203, configured to store a program executed by the processor 1202, and the processor 1202 is configured to execute the program stored in the memory 1203. The memory 1203 is further configured to store some configuration information for an image, for example, algorithm information used for processing the image and a compression ratio used for compressing the image.

The memory 1203 may be disposed inside the high dynamic range image processing apparatus, or may be disposed outside the high dynamic range image processing apparatus. The high dynamic range image processing apparatus may further include an input/output interface 1204, configured to write the program and the configuration information into the memory 1203 and output a processed image by using the input/output interface 1204.

The high dynamic range image processing apparatus may further include a display 1205, for example, an LED display. Certainly, the display 1205 may be disposed inside the high dynamic range image processing apparatus, or may be disposed outside the high dynamic range image processing apparatus as an independent device.

The receiver 1201, the memory 1203, the processor 1202, the input/output interface 1204, and the display 1205 may be connected by using a bus 1206. A manner of connection between other components is merely a schematic description rather than a limitation. The bus may be classified into an address bus, a data bus, a control bus, and the like. For ease of representation, only one bold line is used in FIG. 12 for representation, but it does not indicate that there is only one bus or one type of bus.

The memory 1203 may be a volatile memory (English: volatile memory) such as a random-access memory (English: random-access memory, RAM for short). Alternatively, the memory 1203 may be a non-volatile memory (English: non-volatile memory) such as a read-only memory (English: read-only memory, ROM for short), a flash memory (English: flash memory), a hard disk drive (English: hard disk drive, HDD for short), or a solid-state drive (English: solid-state drive, SSD for short). Alternatively, the memory 1203 is any other medium that can be used to carry or store expected program code in a command or data structure form and that can be accessed by a computer. However, this is not limited thereto. The memory 1203 may be a combination of the memories.

The display 1205 may be divided into a backlight layer and a liquid crystal layer.

The receiver 1201 is configured to obtain a to-be-processed image. The image may be a high range dynamic image, so that the processor 1202 processes the to-be-processed image.

The processor 1202 is configured to execute the program stored in the memory 1203, and is configured to perform the methods corresponding to the embodiments shown in FIG. 4 and FIG. 5. For content of execution, refer to the embodiments shown in FIG. 4 and FIG. 5. Brief description is provided herein in this embodiment of the present invention, and details are not repeated.

The processor 1202 is configured to: divide the high dynamic range image obtained by the receiver 1201 into a first liquid crystal image and a first backlight image; perform compression processing on the first liquid crystal image by decreasing a quantity of bits used to represent a single pixel of the first liquid crystal image, to obtain a compressed first liquid crystal image to be displayed at a liquid crystal layer of the display 1205, where the display 1205 is configured to display the high dynamic range image; and perform compression processing on the first backlight image by decreasing a quantity of bits used to represent a single pixel of the first backlight image, to obtain a compressed first backlight image to be displayed at a backlight layer of the display.

The high dynamic range image processing apparatus provided in this embodiment of the present invention may be applied to a video codec.

In a conventional HDR processing technology, compression processing is first performed on an HDR image and then backlight control processing is performed. In this way, a large quantity of image details of a displayed HDR image are lost. Backlight control processing is performed on a compressed image, and therefore the backlight control processing can only be used to simulate the compressed image in a processing process. This may result in inconsistency between a finally processed displayed image and the original HDR image. In this embodiment of the present invention, layer division processing is directly performed on the HDR image, and then backlight control processing is performed on a backlight image obtained after layer division, so that loss of a large amount of detail information due to compression can be avoided. Compression processing is performed, by using different compression degrees, on all layers of liquid crystal images obtained after layer division, so that loss of a large amount of detail information due to overall compression can be reduced, thereby ensuring, to a maximum extent, consistency between a processed displayed image and the original HDR image.

Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but being not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams, and a combination of a process and/or a block in the flowcharts and/or the block diagrams. These computer program instructions may be provided for a general-purpose computer, a special-purpose computer, an embedded processor, or a processor of any other programmable data processing device to generate a machine, so that the instructions executed by a computer or a processor of any other programmable data processing device generate an apparatus for implementing a specified function in one or more processes in the flowcharts and/or in one or more blocks in the block diagrams.

These computer program instructions may also be stored in a computer readable memory that can instruct the computer or any other programmable data processing device to work in a specified manner, so that the instructions stored in the computer readable memory generate an artifact that includes an instruction apparatus. The instruction apparatus implements a specified function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specified function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the embodiments of the present invention without departing from the spirit and scope of the embodiments of the present invention. The present invention is intended to cover these modifications and variations provided that they fall within the scope of protection defined by the following claims and their equivalent technologies.

**Claims**

1.  A high dynamic range image processing method, comprising:

    obtaining a high dynamic range image;
    dividing the high dynamic range image into a first liquid crystal image and a first backlight image;
    performing compression processing on the first liquid crystal image by decreasing a quantity of bits used to represent a single pixel of the first liquid crystal image, to obtain a compressed first liquid crystal image to be displayed at a liquid crystal layer of a display, wherein the display is configured to display the high dynamic range image; and
    performing compression processing on the first backlight image by decreasing a quantity of bits used to represent a single pixel of the first backlight image, to obtain a compressed first backlight image to be displayed at a backlight layer of the display.

2.  The method according to claim 1, wherein the performing compression processing on the first liquid crystal image by decreasing a quantity of bits used to represent a single pixel of the first liquid crystal image comprises:

    dividing the first liquid crystal image into at least two layers of second liquid crystal images, wherein the at least two layers of second liquid crystal images comprise image information of the first liquid crystal image, and any two of the at least two layers of second liquid crystal images comprise different image information;
    separately performing compression processing on the at least two layers of second liquid crystal images by decreasing a quantity of bits used to represent a single pixel of each of the at least two layers of second liquid crystal images; and
    fusing compressed at least two layers of second liquid crystal images to obtain the compressed first liquid crystal image.

3.  The method according to claim 2, wherein the at least two layers of second liquid crystal images comprise two layers of second liquid crystal images, and the decreasing a quantity of bits used to represent a single pixel of each of the at least two layers of second liquid crystal images comprises:

> separately performing compression processing on pixel values of the two layers of second liquid crystal images based on different compression ratios; and
> for any pixel whose pixel value is compressed and that is of either of the two layers of second liquid crystal images, using N bits to represent the compressed pixel value of the any pixel whose pixel value is compressed, to obtain two layers of compressed second liquid crystal images, wherein N is a positive integer less than a quantity of bits used to represent the any pixel whose pixel value is compressed.

4. The method according to claim 2 or 3, wherein the at least two layers of second liquid crystal images comprise a low-frequency second liquid crystal image, and the low-frequency second liquid crystal image comprises low-frequency image information of the first liquid crystal image; and
before the decreasing a quantity of bits used to represent a single pixel of each of the at least two layers of second liquid crystal images, the method further comprises:

> performing dither processing on the low-frequency second liquid crystal image; or
> performing global tone mapping processing on the low-frequency second liquid crystal image; or
> performing global tone mapping processing on an image obtained after dither processing is performed on the low-frequency second liquid crystal image; or
> performing dither processing on an image obtained after global tone mapping processing is performed on the low-frequency second liquid crystal image.

5. The method according to claim 2 or 3, wherein before the decreasing a quantity of bits used to represent a single pixel of each of the at least two layers of second liquid crystal images, the method further comprises:

> performing dither processing on the at least two layers of second liquid crystal images; or
> performing global tone mapping processing on the at least two layers of second liquid crystal images; or
> separately performing global tone mapping processing on images obtained after dither processing is performed on the at least two layers of second liquid crystal images; or
> separately performing dither processing on images obtained after global tone mapping processing is performed on the at least two layers of second liquid crystal images.

6. The method according to any one of claims 1 to 5, wherein the obtaining a high dynamic range image comprises:

> obtaining a to-be-processed image; and
> using the to-be-processed image as the high dynamic range image when a pixel bit quantity of the to-be-processed image is greater than a preset pixel bit quantity.

7. The method according to any one of claims 1 to 5, wherein the obtaining a high dynamic range image comprises:

> obtaining a to-be-processed image, and performing dequantization processing on the to-be-processed image when a pixel bit quantity of the to-be-processed image is less than or equal to a preset pixel bit quantity, to obtain the high dynamic range image.

8. The method according to any one of claims 1 to 7, wherein the dividing the high dynamic range image into a first liquid crystal image and a first backlight image comprises:

> performing backlight statistics collection on the high dynamic range image to obtain the first backlight image, wherein a backlight value of any region in the high dynamic range image is a pixel value of a pixel that is in the first backlight image and that is corresponding to the region; increasing resolution of the first backlight image, and performing blurring processing on a first backlight image whose resolution is increased, to obtain a second backlight image, wherein the second backlight image is used to simulate an image displayed after light diffusion processing is performed, by using an optical component in the display, on the first backlight image when the first backlight image is displayed at the backlight layer; and
> obtaining the first liquid crystal image by dividing the high dynamic range image based on the second backlight image.

9. A high dynamic range image processing apparatus, comprising:

> a receiver, configured to obtain a high dynamic range image;
> a processor, configured to: divide the high dynamic range image into a first liquid crystal image and a first backlight image; perform compression processing on the first liquid crystal image by decreasing a quantity of bits used to represent a single pixel of the first liquid crystal image, to obtain a compressed first liquid crystal image to be displayed at a liquid crystal layer of a display, wherein the display is configured to display the high dynamic range image; and perform compression processing on the first backlight image by decreasing a quantity of bits used to represent a single pixel of the first backlight image, to obtain a compressed first backlight image to be displayed at a backlight layer of the display.

10. The apparatus according to claim 9, wherein when performing compression processing on the first liquid crystal image by decreasing the quantity of bits used to represent the single pixel of the first liquid crystal image, the processor is configured to:

    divide the first liquid crystal image into at least two layers of second liquid crystal images, wherein the at least two layers of second liquid crystal images comprise image information of the first liquid crystal image, and any two of the at least two layers of second liquid crystal images comprise different image information; separately perform compression processing on the at least two layers of second liquid crystal images by decreasing a quantity of bits used to represent a single pixel of each of the at least two layers of second liquid crystal images; and fuse compressed at least two layers of second liquid crystal images to obtain the compressed first liquid crystal image.

11. The apparatus according to claim 10, wherein the at least two layers of second liquid crystal images comprise two layers of second liquid crystal images, and when decreasing the quantity of bits used to represent the single pixel of each of the at least two layers of second liquid crystal images, the processor is configured to:

    separately perform compression processing on pixel values of the at least two layers of second liquid crystal images based on different compression ratios; and for any pixel whose pixel value is compressed and that is of either of the two layers of second liquid crystal images, use N bits to represent the compressed pixel value of the any pixel whose pixel value is compressed, to obtain two layers of compressed second liquid crystal images, wherein N is a positive integer less than a quantity of bits used to represent the any pixel whose pixel value is compressed.

12. The apparatus according to claim 10 or 11, wherein the at least two layers of second liquid crystal images comprise a low-frequency second liquid crystal image, and the low-frequency second liquid crystal image comprises low-frequency image information of the first liquid crystal image; and before decreasing the quantity of bits used to represent the single pixel of each of the at least two layers of second liquid crystal images, the processor is further configured to:

    perform dither processing on the low-frequency second liquid crystal image; or perform global tone mapping processing on the low-frequency second liquid crystal image; or perform global tone mapping processing on an image obtained after dither processing is performed on the low-frequency second liquid crystal image; or perform dither processing on an image obtained after global tone mapping processing is performed on the low-frequency second liquid crystal image.

13. The apparatus according to claim 10 or 11, wherein before decreasing the quantity of bits used to represent the single pixel of each of the at least two layers of second liquid crystal images, the processor is further configured to:

    perform dither processing on the at least two layers of second liquid crystal images; or perform global tone mapping processing on the at least two layers of second liquid crystal images; or separately perform global tone mapping processing on images obtained after dither processing is performed on the at least two layers of second liquid crystal images; or separately perform dither processing on images obtained after global tone mapping processing is performed on the at least two layers of second liquid crystal images.

14. The apparatus according to any one of claims 9 to 13, wherein the receiver is further configured to:

    obtain a to-be-processed image; and the processor is further configured to use, when a pixel bit quantity of the to-be-processed image obtained by the receiver is greater than a preset pixel bit quantity, the to-be-processed image as the high dynamic range image.

15. The apparatus according to any one of claims 9 to 13, wherein the receiver is further configured to:

    obtain a to-be-processed image; and

the processor is further configured to perform, when a pixel bit quantity of the to-be-processed image obtained by the receiver is less than or equal to a preset pixel bit quantity, dequantization processing on the to-be-processed image, to obtain the high dynamic range image.

16. The apparatus according to any one of claims 9 to 15, wherein when dividing the high dynamic range image into the first liquid crystal image and the first backlight image, the processor is configured to:

perform backlight statistics collection on the high dynamic range image to obtain the first backlight image, wherein a backlight value of any region in the high dynamic range image is a pixel value of a pixel that is in the first backlight image and that is corresponding to the region;
increase resolution of the first backlight image, and perform blurring processing on a first backlight image whose resolution is increased, to obtain a second backlight image, wherein the second backlight image is used to simulate an image displayed after light diffusion processing is performed, by using an optical component in the display, on the first backlight image when the first backlight image is displayed at the backlight layer; and
obtain the first liquid crystal image by dividing the high dynamic range image based on the second backlight image.

|  |  | Indoor | Cloudy in the | Sunny in the |  |
| Stars | Moonlight | lighting | outside | outside | Sunlight |

$10^{-3}$     1     100     500     2000     $10^9$

Real world

Display device

FIG. 1

Backlight layer

Liquid crystal layer

FIG. 2

Symbol    Exponent            Fractional part of a logarithm

FIG. 3

S401

Obtain a high dynamic range image

S402

Divide the high dynamic range image into a first liquid crystal image and a first backlight image

S403

Perform compression processing on the first liquid crystal image by decreasing a quantity of bits used to represent a single pixel of the first liquid crystal image, to obtain a compressed first liquid crystal image to be displayed at a liquid crystal layer of a display, where the display is configured to display the high dynamic range image

S404

Perform compression processing on the first backlight image by decreasing a quantity of bits used to represent a single pixel of the first backlight image, to obtain a compressed first backlight image to be displayed at a backlight layer of the display device

FIG. 4

S501

Obtain a to-be-processed image

S502

Determine whether a pixel bit quantity of the to-be-processed image is greater than a preset pixel bit quantity

S503

Use the to-be-processed image as a high dynamic range image

S504

Perform dequantization processing on the to-be-processed image to obtain a high dynamic range image

FIG. 5

TO FIG. 6B

TO FIG. 6B

TO FIG. 6B

Low-bit base layer liquid crystal image

Low-bit detail layer liquid crystal image

Backlight processing

Base layer compression

Detail layer compression

High-bit base layer liquid crystal image

High-bit detail layer liquid crystal image

Low-resolution backlight image

Layer division processing

High-bit liquid crystal image

Layer division processing

High-bit image

FIG. 6A

Fusion → Low-bit liquid crystal image → Conventional post processing → Overlaying → Displayed image

FIG. 6B

FIG. 7

High-bit base layer liquid crystal image → Dither → Global tone mapping → Compression 1 → Low-bit base layer liquid crystal image

FIG. 8

High-bit detail layer liquid crystal image → Compression 2 → Low-bit detail layer liquid crystal image

FIG. 9

TO FIG. 10B

TO FIG. 10B

TO FIG. 10B

TO FIG. 10B

Low-bit base layer liquid crystal image

Low-bit intermediate layer liquid crystal image

Low-bit detail layer liquid crystal image

Base layer compression

Intermediate layer compression

Detail layer compression

High-bit base layer liquid crystal image

High-bit intermediate layer liquid crystal image

High-bit detail layer liquid crystal image

Backlight processing

Layer division processing

Low-resolution backlight image

High-bit liquid crystal image

Layer division processing

High-bit image

FIG. 10A

CONT.
FROM
FIG. 10A

CONT.
FROM
FIG. 10A

CONT.
FROM
FIG. 10A

CONT.
FROM
FIG. 10A

Fusion

Low-bit liquid
crystal image

Conventional
post
processing

Overlaying

Displayed
image

FIG. 10B

28

High dynamic range image processing apparatus

1101

Obtaining unit

1105

Bit processing unit

1102

Division unit

1103

First compression processing unit

1104

Second compression processing unit

FIG. 11

High dynamic range image processing apparatus

1201

Receiver

1204

Input/output interface

1202

Processor

1206

1203

Memory

1205

Display

FIG. 12

# INTERNATIONAL SEARCH REPORT

| International application No. |
|---|
| **PCT/CN2016/075989** |

### A. CLASSIFICATION OF SUBJECT MATTER

H04N 19/30 (2014.01) i; G09G 3/34 (2006.01) i

According to International Patent Classification (IPC) or to both national classification and IPC

### B. FIELDS SEARCHED

Minimum documentation searched (classification system followed by classification symbols)

H04N; G09G; G06T

Documentation searched other than minimum documentation to the extent that such documents are included in the fields searched

Electronic data base consulted during the international search (name of data base and, where practicable, search terms used)

CNPAT, EPODOC, WPI, CNKI, IEEE: high dynamic, wide dynamic, range, liquid crystal, high dynamic range, wide dynamic range, image?, LCD, backlight, tone mapping, compress+, layer

### C. DOCUMENTS CONSIDERED TO BE RELEVANT

| Category* | Citation of document, with indication, where appropriate, of the relevant passages | Relevant to claim No. |
|---|---|---|
| Y | WO 2015097120 A1 (THOMSON LICENSING), 02 July 2015 (02.07.2015), description, page 8, line 9 to page 12, line 2, and figure 1 | 1-16 |
| Y | CN 101187756 A (AU OPTRONICS CORP.), 28 May 2008 (28.05.2008), description, page 4, paragraphs 1-4, and figures 2-3 | 1-16 |
| Y | WANG, Qi et al. "Improved Layered Tone Mapping Algorithm of High Dynamic Range Image", PACKAGING ENGINEERING, vol. 36, no. 7, 30 April 2015 (30.04.2015), section 1 | 2-5, 10-13 |
| A | WO 2015097168 A1 (THOMSON LICENSING), 02 July 2015 (02.07.2015), the whole document | 1-16 |
| A | CN 102317999 A (THOMSON LICENSING CORPORATION), 11 January 2012 (11.01.2012), the whole document | 1-16 |
| A | CN 101621608 A (ALTEK CO., LTD.), 06 January 2010 (06.01.2010), the whole document | 1-16 |

☐ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 09 November 2016 (09.11.2016) | **30 November 2016 (30.11.2016)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**HE, Yanjuan**<br><br>Telephone No.: (86-10) **61648240** |

Form PCT/ISA/210 (second sheet) (July 2009)

## INTERNATIONAL SEARCH REPORT
### Information on patent family members

International application No.

**PCT/CN2016/075989**

| Patent Documents referred in the Report | Publication Date | Patent Family | Publication Date |
|---|---|---|---|
| WO 2015097120 A1 | 02 July 2015 | EP 2890129 A1 | 01 July 2015 |
| | | KR 20160102414 A | 30 August 2016 |
| | | TW 201537960 A | 01 October 2015 |
| CN 101187756 A | 28 May 2008 | CN 101187756 B | 21 July 2010 |
| WO 2015097168 A1 | 02 July 2015 | KR 20160102438 A | 30 August 2016 |
| | | TW 201537959 A | 01 October 2015 |
| CN 102317999 A | 11 January 2012 | WO 2010093433 A1 | 19 August 2010 |
| | | JP 2012517622 A | 02 August 2012 |
| | | CN 102317999 B | 09 July 2014 |
| | | EP 2396784 A1 | 21 December 2011 |
| | | KR 20110128853 A | 30 November 2011 |
| | | TW I435307 B | 21 April 2014 |
| | | US 2012056906 A1 | 08 March 2012 |
| | | TW 201037686 A | 16 October 2010 |
| | | JP 5926960 B2 | 25 May 2016 |
| CN 101621608 A | 06 January 2010 | CN 101621608 B | 19 September 2012 |

Form PCT/ISA/210 (patent family annex) (July 2009)